# EUROPÄISCHE PATENTSCHRIFT

(11) **EP 1 510 391 B1**
(45) Veröffentlichungstag und Bekanntmachung des Hinweises auf die Patenterteilung: **30.08.2006**
(21) Anmeldenummer: 04015010.4
(22) Anmeldetag: 25.06.2004
(51) Int. Cl.: B60K 15/03, C01B 3/06

(54) **Verfahren und Vorrichtung zur Kraftstoffversorgung eines wasserstoffbetriebenen Kraftfahrzeugs**
Method and device for supplying fuel to a hydrogen-powered vehicle
Procédé et dispositif d'alimentation en carburant pour un véhicule fonctionnant à l'hydrogene

(30) Priorität: 26.08.2003 DE 10339548
(43) Veröffentlichungstag der Anmeldung: 02.03.2005
(73) Patentinhaber: Kautex Textron GmbH & Co. KG., 53229 Bonn (DE)
(72) Erfinder: Bolle, Dirk, 53229 Bonn (DE)
(74) Vertreter: Kierdorf, Theodor

(56) Entgegenhaltungen:
- EP-A- 1 138 542
- EP-A- 1 375 419
- DE-C- 344 965
- FR-A- 2 807 745
- GB-A- 794 125
- US-A- 3 562 019

## Beschreibung

Bei der Kraftstoffversorgung von Kfz mit Wasserstoff-Brennstoff-Zelle kann der für die Brennstoffzelle benötigte Wasserstoff in reiner Form im Fahrzeug mitgeführt und bevorratet werden. Als alternative Vorgehensweise hierzu ist es bekannt, den Wasserstoff durch eine chemische bzw. katalytische Reaktion während des Betriebs des Kfz zu erzeugen. Hieraus ergeben sich sicherheitsrelevante Vorzüge. Bekannt ist hierzu beispielsweise die sogenannte Natriumborhydrid Reaktion. Als Kraftstoff wird Natriumborhydrid (NaBH₄) in wässriger Lösung vorgehalten. Das Natriumborhydrid wird einem Katalysator zugeführt, der reinen Wasserstoff und Natriumborat (NaBO₂) in wässriger Lösung freisetzt. Der technisch reine Wasserstoff kann direkt einer dem Katalysator nachgeschalteten Brennstoffzelle zugeführt werden. Dort wird Wasserstoff zusammen mit Luftsauerstoff zu Wasser reagiert, und zwar unter Freisetzung elektrischer Energie für einen Antriebsmotor des Kfz. Das bei der katalytischen Umsetzung des Natriumborhydrids anfallende Natriumborat lässt sich verfahrenstechnisch wieder zu Natriumborhydrid rezyklieren. Es ist daher sinnvoll, den zu Natriumborat reagierten Kraftstoff in einem hierfür vorgesehenen Sammelbehälter im Kfz aufzufangen.

Wenn man zur Bevorratung des Kraftstoffs das übliche Tankvolumen eines Kfz ansetzt, so ist die aufgrund des Kraftstoffvorrats bemessene Reichweite des Kfz verglichen zu einem mit Kohlenwasserstoff-Verbrennungsmotor ausgerüsteten Kfz verhältnismäßig klein. Unter Verwendung der Natriumborhydrid-Katalyse ist es zusätzlich erforderlich, entsprechendes Speichervolumen für den reagierten Kraftstoff bereitzustellen. Dieses Speichervolumen geht zu Lasten des Nutzvolumens des Kfz.

Um das für die Kraftstoffbevorratung zur Verfügung stehende Volumen möglichst wirkungsvoll ausnutzen zu können, ist es wünschenswert, den nicht reagierten Kraftstoff, d. h. das Natrium--borhydrid, möglichst konzentriert bereitzustellen. Natriumborat fällt in Konzentrationen von mehr als 20 Gew.% in wässriger Lös.ung aus, so dass es sinnvoll ist, dem Katalysator Natriumborhydrid in einer Konzentration von 20 Gew.% in wässriger Lösung zuzuführen. Wenn also Natriumborhydrid in wässriger Lösung in höherer Konzentration bevorratet werden soll, sollte der Lösung vor Eintritt in den Katalysator Wasser zugesetzt werden. Hierzu ist dem Katalysator ein Mischer vorgeschaltet, über den die Natriumborhydrid-Lösung in der gewünschten Verdünnung für den Katalysator bereitgestellt wird. Das dem Mischer zugeführte Wasser wird dabei dem Abgasstrom der Brennstoffzelle entnommen. Der im Abgas enthaltene Wasserdampf wird in einem Kühler auskondensiert und dem Mischer zugeführt. Bei dieser Form der Kraftstoffaufbereitung fallen beispielsweise bei Einsatz von 100 1 einer 30%-igen Natriumborhydrid-Lösung als unreagierter Kraftstoff etwa 115 l 20%-ige Natriumborat-Lösung als reagierter Kraftstoff an. Für das Auffangen und Speichern des reagierten Kraftstoffs wird in diesem Fall besonders viel Volumen benötigt. Das geht entweder zu Lasten der Reichweite des Kfz oder zu Lasten des Nutzvolumens des Kfz.

Aus der EP 1 375 419 A2 ist eine Vorrichtung zur Erzeugung von Wasserstoff bekannt, die zwei miteinander kommunizierende Behälter umfasst, nämlich eine Reactionskammer und eine Speichervolumen, wobei der Reaktionskammer noch nicht reagierter Kraftstoff aus dem Speichervolumen zugeführt wird.

Aus der GB 794125 ist ein Kraftstoffbehälter bekannt, der mittels einer flexiblen Trennwand in zwei Volumina unterteilt ist, wobei eines der Volumina mit Druckluft beaufschlagt wird, wenn das andere Volumen des Behälters entleert wird. Ziel dieser Anordnung ist es, zu verhindern, dass der flüssige Kraftstoff in dem einen Volumen bei Entleerung des Volumens mit Sauerstoff in Berührung kommt, sodass die Bildung eines explosiven Sauerstoff-/Treibstoffgemischs unterbunden wird.

Aus der DE 344965 C ist eine Brennstoffbehälteranordnung für Kraftfahrzeuge bekannt, die mehrere parallel geschaltete Behälter umfasst, die nacheinander zur Entleerung gelangen.

Der Erfindung liegt daher die Aufgabe zugrunde, sowohl ein Verfahren als auch eine Vorrichtung zur Kraftstoffversorgung eines solchen Kfz bereitzustellen, mit welchen unter geringster Nutzvolumenverringerung eine ausreichende Kraftstoffbevorratung zur Erzielung einer zufriedenstellenden Reichweite erzielbar ist.

Die Aufgabe wird zunächst gelöst durch ein Verfahren zur Kraftstoffversorgung eines Kraftfahrzeugs mit wenigstens einem Wasserstoffverbraucher, beispielsweise einer Brennstoffzelle, in welcher Wasserstoff in elektrische Energie umgesetzt wird, wobei der Wasserstoff durch katalytische Reaktion eines als Kraftstoff vorgesehenen Wasserstoffdonators freigesetzt wird und dabei reagierter, rezyklierbarer Kraftstoff anfällt, wobei das Verfahren die Entnahme nicht reagierten Kraftstoffs aus einem ersten Speichervolumen, die Befüllung wenigstens eines zweiten von dem ersten Speichervolumen getrennten Speichervolumens mit reagiertem Kraftstoff und die wenigstens teilweise zusätzliche Nutzung des durch die Entnahme freiwerdenden ersten Speichervolumens zur Speicherung des reagierten Kraftstoffs umfast.

Der Erfindung liegt der Gedanke zugrunde, wenigstens ein Teilvolumen des ursprünglich für unreagierten Kraftstoff vorgesehenen Speichervolumens nach Entnahme von Kraftstoff zur Speicherung des reagierten Kraftstoffs zu verwenden. Bei einer solchen Vorgehensweise lässt sich das für Speicherung von nicht reagiertem Kraftstoff und für Speicherung von reagiertem Kraftstoff insgesamt benötigte Volumen auf ein Optimum reduzieren.

Zur optimalen Ausnutzung des bei einem Kfz zur Verfügung stesenden Bauraums kann es beispielsweise vorteilhaft sein, zur Bevorratung des Kraftstoffs mehrere räumlich voneinander getrennte Behälter als Speichervolumina zu verwenden.

Eine besonders bevorzugte Variante des erfindungsgemäßen Verfahrens zeichnet sich durch die Verwendung wenigstens dreier in Reihe geschalteter Behälter als Speichervolumina aus, wobei die Entnahme des nicht reagierten Kraftstoffs aus einem Entnahmebehälter erfolgt, der Entnahmebehälter aus wenigstens einem Vorratsbehälter mit nicht reagiertem Kraftstoff gespeist wird, ein Sammelbehälter mit reagiertem Kraftstoff befüllt wird und der reagierte Kraftstoff aus dem Sammelbehälter in den oder die Vorratsbehälter umgeleitet wird, wenn der nicht reagierte Kraftstoff vollständig aus diesem entnommen ist.

Es ist leicht nachvollziehbar, dass der Entnahmebehälter nicht für die Befüllung mit reagiertem Kraftstoff zur Verfügung steht, da der Betrieb des Kfz bis zu dessen Betankung gewährleistet sein muss. Weiterhin kann das Volumen des Sammelbehälters nicht mit nicht reagiertem Kraftstoff betankt bzw. befüllt werden, da unmittelbar nach Aufnahme des Betriebs des Kfz bereits reagierter Kraftstoff anfällt, der aufgefangen werden muss.

Wie nachstehend noch erläutert werden wird, ist es sinnvoll, die Anzahl und Größe der vorzusehenden Behälter in Hinblick auf die Menge von anfallendem reagierten Kraftstoff bezogen auf die Menge von eingesetztem nicht reagiertem Kraftstoff zu optimieren. Wenn auf 100% nicht reagierten Kraftstoff etwa 115% reagierter Kraftstoff anfallen, hat sich die Verwendung von insgesamt 5 Kraftstoffbehältern bei der Durchführung des Verfahrens als besonders vorteilhaft erwiesen.

Die der Erfindung zugrunde liegende Aufgabe wird weiterhin gelöst durch eine Kraftstoffbehälter-Anordnung zur Kraftstoffversorgung eines Kraftfahrzeuges mit wenigstens einem Wasserstoffverbraucher, beispielsweise einer Brennstoffzelle, in welcher Wasserstoff in elektrische Energie umgesetzt wird, wobei der Wasserstoff durch katalytische Reaktion eines als Kraftstoff vorgesehenen Wasserstoffdonators freigesetzt wird und dabei reagierter, rezyklierbarer Kraftstoff anfällt, umfassend wenigstens einen Entnahmebehälter, der mit Mitteln zur Förderung des Kraftstoffs versehen ist, wenigstens einen Vorratsbehälter, der mit dem Entnahmebehälter kommuniziert und der mit Mitteln zur Förderung des Kraftstoffs in den Entnahmebehälter versehen ist und einen Sammelbehälter, der über einen Überlauf mit einem Vorratsbehälter verbunden ist.

Vorzugsweise ist der Vorratsbehälter über ein schaltbares Mehr-Wege-Ventil an den Entnahmebehälter und an den Sammelbehälter angeschlossen, so dass sicher gestellt ist, dass der Vorratsbehälter entweder zur Aufnahme von reagiertem Kraftstoff oder zur Aufnahme und Abgabe von nicht reagiertem Kraftstoff verwendbar ist.

Zweckmäßigerweise sind wenigstens zwei weitere Vorratsbehälter vorgesehen, die jeweils über schaltbare Ventile mit dem Entnahmebehälter und dem Sammelbehälter kommunizieren. Wie eingangs bereits erwähnt wurde, ist eine Behälteranordnung bestehend aus insgesamt 5 Behältern hinsichtlich der Ausnutzung des insgesamt benötigten Volumens optimal.

Bevorzugt speisen die Vorratsbehälter den Entnahmebehälter jeweils über Saugstrahlpumpen, die jeweils über einen Kraftstoffrücklauf aus dem Entnahmebehälter angetrieben sind.

Der Rücklauf kann beispielsweise von einer Entnahmeleitung aus dem Entnahmebehälter abgezweigt sein.

Zweckmäßigerweise sind die Vorratsbehälter jeweils an eine gemeinsame Rücklaufleitung von dem Entnahmebehälter und an eine gemeinsame Speiseleitung zu dem Entnahmebehälter angeschlossen.

Die Rücklaufleitung kann beispielsweise über ein Druckregelventil an die Entnahmeleitung angeschlossen sein. Über das Druckregelventil wird dann der von der Pumpe geförderte Kraftstoffvolumenstrom, der nicht dem Katalysator zugeführt werden muss, in die Rücklaufleitung eingespeist.

Besonders vorteilhaft ist es, wenn die Größe des Sammelbehälters und der Vorratsbehälter jeweils so bemessen ist, dass der in Förderrichtung des Kraftstoffs jeweils stromaufwärts gelegene Behälter das Volumen an reagiertem Kraftstoff aufnehmen kann, das bei der Entleerung des stromabwärts nachgeschalteten Behälters mit nicht reagiertem Kraftstoff und dessen Verarbeitung anfällt.

Der Entnahmebehälter und die Vorratsbehälter können jeweils an eine gemeinsame Befüllleitung angeschlossen sein, die Sammelbehälter und die Vorratsbehälter können jeweils an eine gemeinsame Entleerungsleitung angeschlossen sein.

Alternativ ist die Befüllung und Entleerung der Kraftstoffbehälter-Anordnung über eine gemeinsame Leitung durchführbar. Unter Entleerung im vorstehend beschriebenen Sinne ist die Entleerung zwecks Entsorgung des reagierten Kraftstoffs zu verstehen.

Die Erfindung wird nachstehend anhand mehrerer in den Zeichnungen dargestellter Ausführungsbeispiele erläutert werden.

Es zeigen:
- Fig. 1: eine schematische Ansicht eines Kraftstoffbehälters nach einem ersten Ausführungs-beispiel des verfahrens gemäß der Erfindung.
- Fig. 2: eine schematische Ansicht des in Figur 1 dargestellten Kraftstoffbehälters im befüllten Zustand,
- Fig. 3: eine schematische Ansicht dieses Kraftstoffbehälters während des Betriebs des Kfz,
- Fig. 4: eine schematische Ansicht eines Kraftstoffbehälters gemäß einem Ausführungsbeispiel der Erfindung,
- Fig. 5: eine schematische Ansicht einer Kraftstoffbehälter-Anordnung gemäß der Erfindung, wobei der Einfachheit halber nur die Befüll-, Entleerungs- und Entlüftungsleitungen dargestellt sind,
- Fig. 6: eine schematische Ansicht der Kraftstoffbehälter-Anordnung gemäß der Erfindung, bei der zur Befüllung und Entleerung nur eine einzige Leitung vorgesehen ist und
- Fig. 7-10: schematische Ansichten der Kraftstoffbehälter-Anordnung gemäß der Erfindung, die jeweils die Kraftstofffließwege bei verschiedenen Betriebssituationen darstellen.

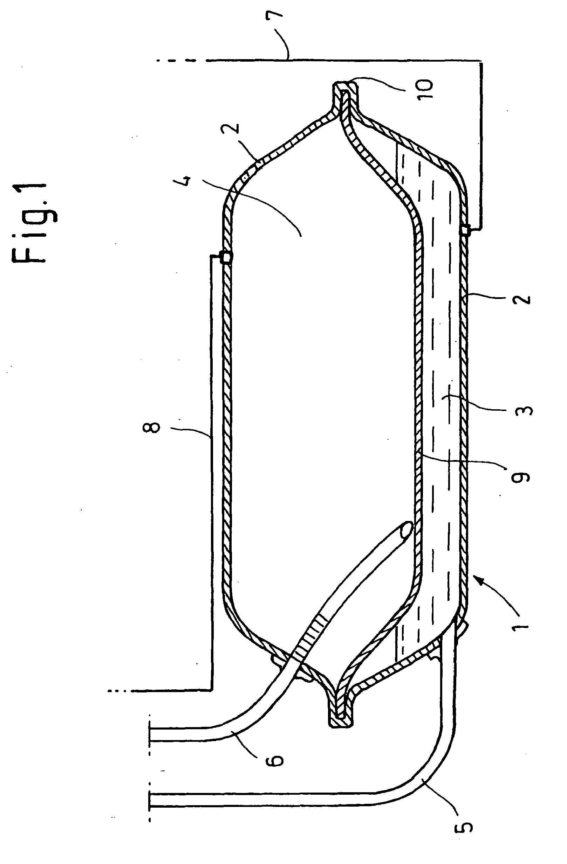

Der in Figur 1 dargestellte Kraftstoffbehälter 1 ist als aus zwei Halbschalen 2 gebildeter Kunststoffbehälter ausgebildet, der ein erstes unteres Speichervolumen 3 und ein zweites oberes Speichervolumen 4 aufweist. Das erste Speichervolumen 3 dient zur Aufnahme unreagierten Kraftstoffs für ein mit einer Wasserstoff-Brennstoff-Zelle versehenes Kfz. Als Kraftstoff ist bei dem beschriebenen Ausführungsbeispiel eine wässrige Lösung mit einer 30%-Natriumborhydrid-Konzentration (NaBH₄) vorgesehen. Wie eingangs bereits erläutert wurde, wird die Natriumborhydrid-Lösung als nicht reagierter Kraftstoff über einen Mischer einem Katalysator zugeführt. In dem Katalysator wird Natriumborhydrid unter Freisetzung von Wasserstoff zu Natriumborat (NaBO₂) reagiert. Das Natriumborat wird als reagierter Kraftstoff in dem zweiten Speichervolumen 4 des Kraftstoffbehälters 1 aufgefangen und gespeichert. Das erste Speichervolumen 3 ist an eine Befüllleitung 5 angeschlossen, das zweite Speichervolumen 4 ist hingegen an eine Entleerungsleitung 6 angeschlossen. Das in das Speichervolumen 4 hereinragende Ende der Entleerungsleitung ist flexibel ausgebildet, so dass eine vollständige Entleerung des Speichervolumens 4 vor Betankung des Speichervolumens 3 möglich ist. Mit 7 ist eine Entnahmeleitung bezeichnet, über die der nicht reagierte Kraftstoff aus dem ersten Speichervolumen 3 über eine nicht dargestellte Pumpe durch einen Katalysator zirkulierbar ist. Über die Leitung 8 wird der reagierte Kraftstoff in das zweite Speichervolumen 4 zurückgeführt. Die Speichervolumina 3 und 4 sind durch eine flexible Trennwand 9 gegeneinander abgedichtet.

Figur 1 zeigt die Betankungssituation, bei der das erste Speichervolumen 3 mit nicht reagiertem Kraftstoff befüllt wird. Wie der Abbildung zu entnehmen ist, ist die Fläche der Trennwand so bemessen, dass diese bei unbefülltem Kraftstoffbehälter 1 in Gewichtskraftrichtung durchhängt, mit anderen Worten, deren Fläche ist größer als die Fläche, die der Trennebene der Halbschalen 2 entspricht. An dieser Stelle sei angemerkt, dass der Kraftstoffbehälter auch als einteiliger blasgeformter Kunststoffbehälter ausgebildet sein kann.

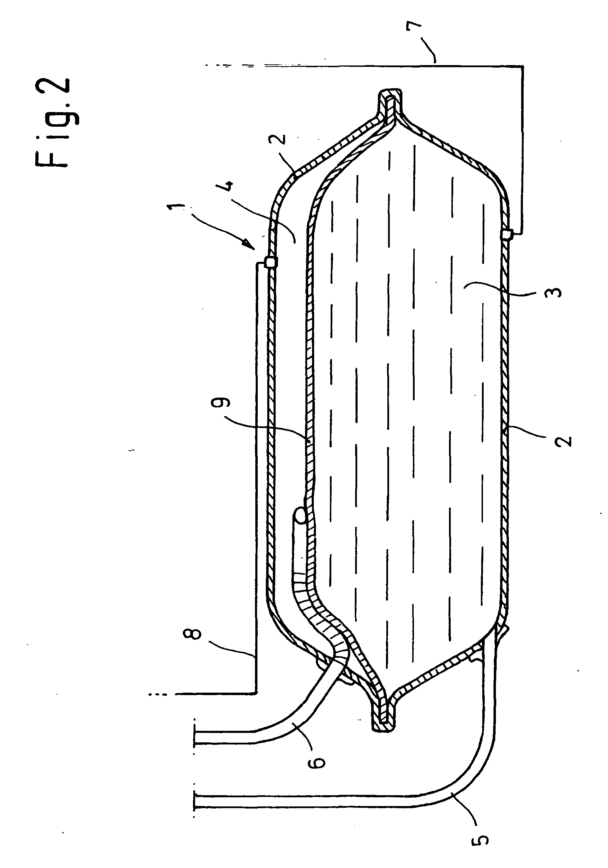

Die Trennwand 9 ist umfänglich im Bereich eines umlaufenden Flansches 10 des Kraftstoffbehälters eingespannt. Steigt nun der Flüssigkeitsspiegel in dem ersten Speichervolumen 3 an, wie dies in Figur 2 dargestellt ist, so wird die Trennwand 9 von dem ansteigenden Flüssigkeitsspiegel angehoben. Figur 2 zeigt den vollständig gefüllten Kraftstoffbehälter 1. Da bei der Natriumborhydrid-Katalyse bei dem gewählten Ausführungsbeispiel etwa 15% mehr reagierter Kraftstoff anfällt als unreagierter Kraftstoff eingesetzt wurde, kann bei der Betankung des Kraftstoffbehälters 1 nicht dessen gesamtes Volumen ausgenutzt werden, vielmehr muss ein Freiraum verbleiben, dessen Größe etwa dem Mehrvolumen an reagiertem Kraftstoff entspricht.

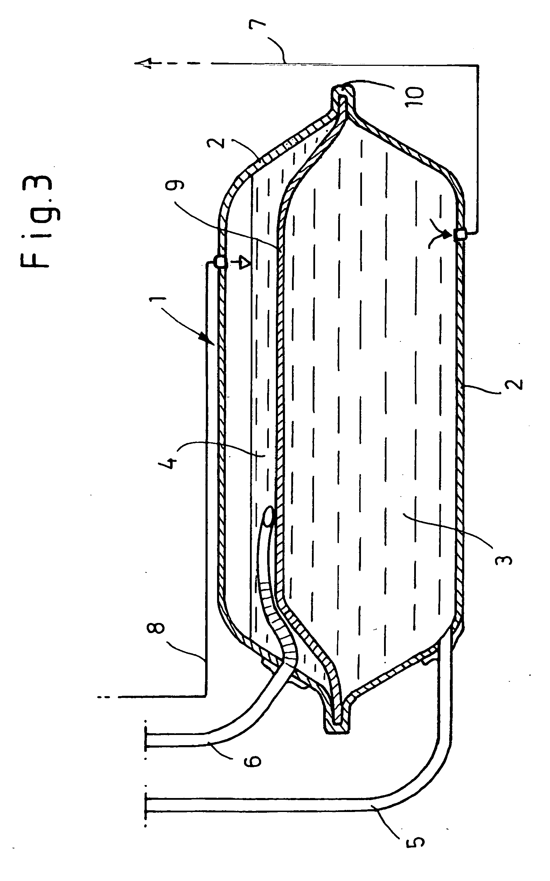

Figur 3 zeigt den Kraftstoffbehälter während des Betriebs des Kfz. Mit zunehmender Entnahme von nicht reagiertem Kraftstoff aus dem zweiten Speichervolumen senkt sich die Trennwand 9 in Schwerkraftrichtung ab, das zweite Speichervolumen 4 ist zu Lasten des ersten Speichervolumens 3 erweiterbar und entsprechend mit reagiertem Kraftstoff befüllbar.

Da durch Schwallbewegungen sowohl des reagierten als auch des nicht reagierten Kraftstoffs noch Wasserstoff ohne katalytische Reaktion freigesetzt werden kann, ist für beide Speichervolumina 3, 4 eine Entlüftung vorgesehen, die nicht dargestellt ist.

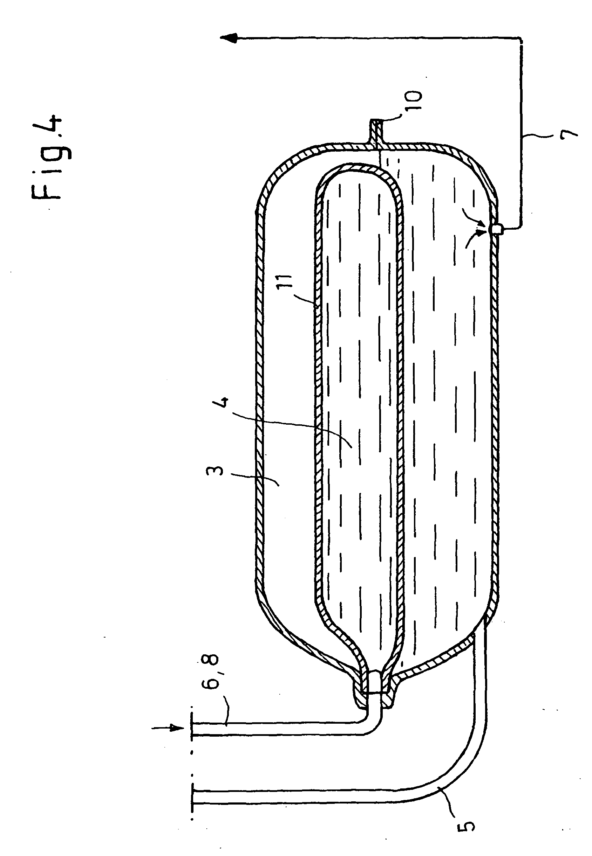

In Figur 4 ist ein zweites Ausführungsbeispiel des Kraftstoffbehälters gemäß der Erfindung dargestellt. Hier sind gleiche Bauteile mit gleichen Bezugszeichen versehen. Innerhalb des Kraftstoffbehälters 1 wird ein zweites Speichervolumen 4 durch einen flexiblen Innenbehälter 11 gebildet. Das als erstes Speichervolumen 3 bezeichnete Volumen des Kraftstoffbehälters 1 ist in diesem Fall dessen Primärvolumen. Der flexible Behälter 11 kann sich zu Lasten des Primärvolumens des Kraftstoffbehälters 1 ausdehnen, wenn letzterer entleert wird. Der Innenbehälter kann auch als Folienbeutel ausgebildet sein. Im Falle des in Figur 4 gezeigten Ausführungsbeispiels hat die Entleerungsleitung 6 gleichzeitig die Funktion der mit 8 bezeichneten Leitung im Fall des Ausführungsbeispiels nach den Figuren 1 bis 3. Mit anderen Worten, die Zuführung des reagierten Kraftstoffs und die Entleerung desselben aus dem Speichervolumen 4 erfolgt durch eine Leitung 6, 8.

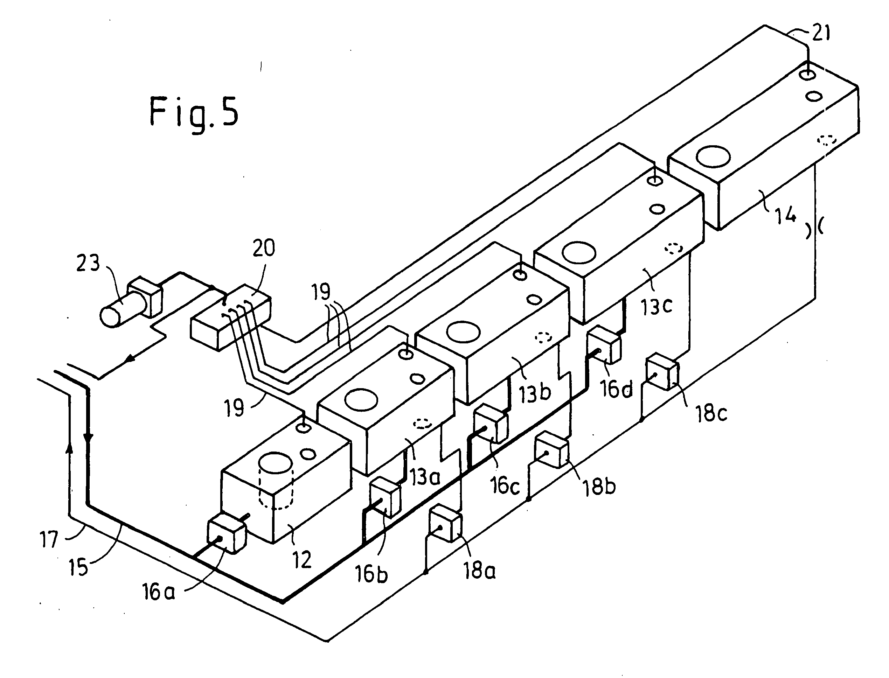

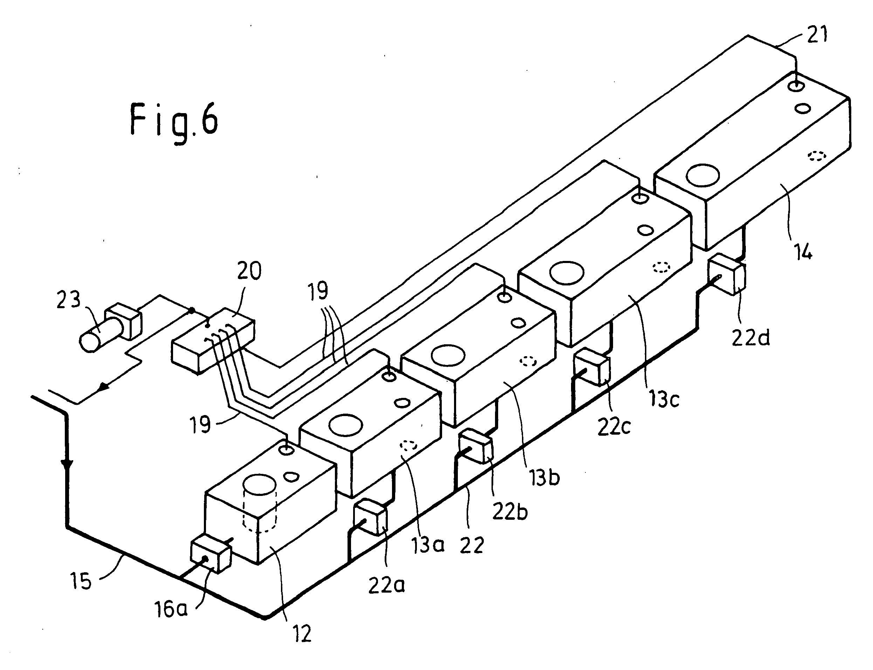

Im Folgenden wird das Ausführungsbeispiel gemäß der Figuren 5 bis 10 erläutert, welches erfindungsgemäß bevorzugt wird. In den Figuren 5 bis 10 ist eine Kraftstoffbehälter-Anordnung gemäß der Erfindung dargestellt. Diese Kraftstoffbehälter-Anordnung besteht im Wesentlichen aus einem Entnahmebehälter 12, drei Vorratsbehältern 13 a, b, c und einem Sammelbehälter 14, die in Reihe geschaltet sind und miteinander kommunizieren. In den Figuren 5 und 6 ist zunächst das Befüll-, Entleerungs-und Belüftungsschema der Kraftstoffbehälter-Anordnung verdeutlicht. Über die mit 15 bezeichnete Befüllleitung werden bei der Betankung des Kfz der Entnahmebehälter 12 sowie die Vorratsbehälter 13 a, b, c mit nicht reagiertem Kraftstoff, d. h. mit einer wässrigen Lösung mit 30% Natriumborhydrid befüllt. Die Behälter 12, 13 a, b und c sind jeweils über ein Befüllventil 16 a, b, c und d an die Befüllleitung 15 angeschlossen, so dass eine Betankung dieser Behälter 12, 13 a, b, c der Reihe nach über die Schaltung der Befüllventile 16 a, b, c und d vorgenommen werden kann. Dies könnte beispielsweise so vonstatten gehen, dass zunächst der Entnahmebehälter 12 befüllt wird, wobei das Befüllventil 16 a geöffnet ist, die Befüllventile 16 b, c, d hingegen geschlossen sind. Wenn der Entnahmebehälter 12 befüllt ist, kann das Befüllventil 16 a schließen, das Befüllventil 16 b hingegen öffnen. Alternativ können zu Beginn der Betankung alle Befüllventile 16 a, b, c und d geöffnet sein. Die Ventile schließen dann je nach Befüllzustand des ein oder anderen Behälters 12, 13 a, b, c der Reihe nach, wobei durch das letzte schließende Befüllventil der Flüssigkeitsdruck in der Befüllleitung 15 ansteigt und ein Schließen des Zapfventils bewirkt. Wie eingangs bereits erwähnt, werden zunächst nur der Entnahmebehälter 12 und die Vorratsbehälter 13 a, b, c befüllt. Der Sammelbehälter 14 muss unmittelbar nach Beenden des Betankungsvorgangs zur Aufnahme von nicht reagiertem Kraftstoff zur Verfügung stehen und kann daher nicht betankt werden. Es ist für den Fachmann erkennbar, dass die Befüllventile 16 a, b, c und d erforderlich sind, um jeweils eine Teilbetankung des Kfz zu ermöglichen, beispielsweise wenn der Vorratsbehälter 13 c entleert ist und nur dieser nachgefüllt werden soll, nicht hingegen die Behälter 12, 13 a und 13 b.

Wie nachstehend noch erläutert werden wird, können sowohl der Sammelbehälter 14 als auch die Vorratsbehälter 13 a, b, c auch reagierten Kraftstoff aufnehmen, letztere allerdings erst nach deren jeweils vollständiger Entleerung. Vor der Betankung des Kfz muss der nicht reagierte Kraftstoff aus dem Sammelbehälter 14 sowie gegebenenfalls aus dem ein oder anderen Vorratsbehälter 13 a, b, c entleert werden. Die Entleerung des Sammelbehälters 14 ist erforderlich, um diesen wieder mit nicht reagiertem Kraftstoff befüllen zu können; die Entleerung der Vorratsbehälter 13 a, b, c muss erfolgen, um deren Volumen wieder für die Neubefüllung mit nicht reagiertem Kraftstoff zur Verfügung zu stellen. Im Folgenden wird der Begriff "Entleerung" für die Entfernung und Entsorgung des reagierten Kraftstoffs benutzt, der Begriff "Entnahme" hingegen bezeichnet die Abführung des nicht reagierten Kraftstoffs zwecks Antrieb des Fahrzeugs. Hierzu sind der Sammelbehälter 14 sowie die Vorratsbehälter 13 a, b, c über eine gemeinsame Entleerungsleitung 17 miteinander verbunden. Die Behälter 14, 13 a, 13 b und 13 c sind jeweils über Entleerungsventile 18 a, b, c an die Entleerungsleitung 17 angeschlossen.

Die Entleerung der Behälter 14, 13 a, b, c erfolgt über die Entleerungsleitung 17 und die Entleerungsventile 18 a, b, c, sobald diese Behälter mit reagiertem Kraftstoff befüllt sind. Eine Befüllung des Entnahmebehälters 12 ist mit reagiertem Kraftstoff nicht möglich, da der Betrieb des Kfz bis zur Betankung gewährleistet sein muss. Alle Behälter 12, 13 a, b, c und 14 sind jeweils über eine Entlüftungsleitung 19 an einen Ausperlbehälter 20 angeschlossen. In dem Ausperlbehälter kann Kondensat aus den Entlüftungsleitungen 19 gesammelt werden, dieses wird über die Leitung 21 in den Sammelbehälter 14 zurückgeführt. Das in dem Ausperlbehälter 20 gesammelte Gas (H₂) wird einem dem Ausperlbehälter 20 nachgeschalteten Katalysator 23 zugeführt.

In Figur 6 ist ein dem in Figur 5 dargestellten Schema entsprechendes Schema gezeigt, wobei die Befüllleitung und die Entleerungsleitung zu einer gemeinsamen Befüll- und Entleerungsleitung 22 zusammengefasst sind, die über die Befüll- und Entleerungsventile 22 a, b, c, d mit den Behältern 13 a, b, c und 14 kommuniziert.

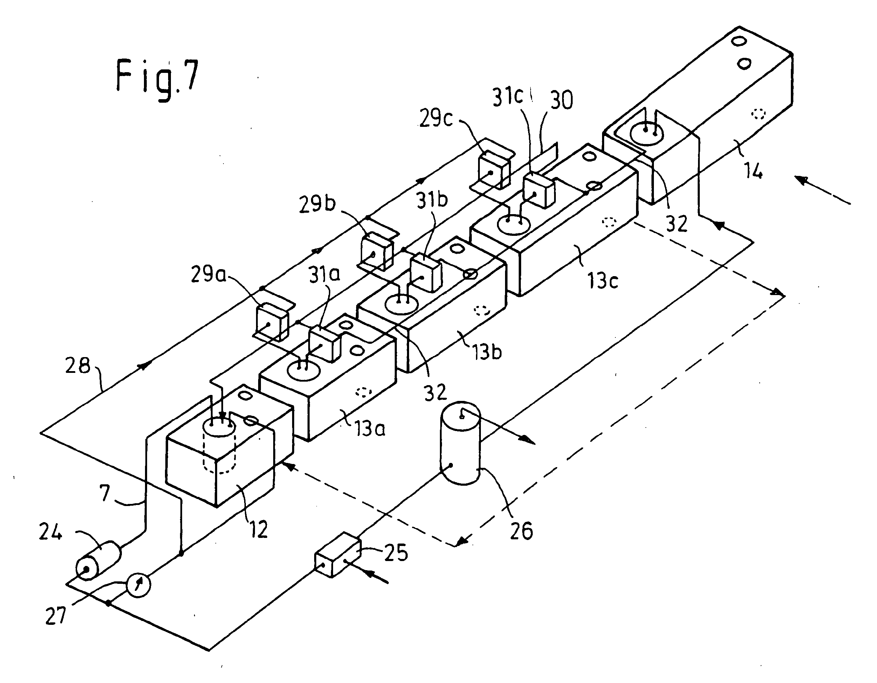

Unter Bezugnahme auf die Figuren 7 bis 10 wird nun nachstehend auf den Kraftstofffluss bei verschiedenen Betriebssituationen des Kfz eingegangen werden.

In Figur 7 ist die Betriebssituation dargestellt, in der die Behälter 12, 13 a, 13 b und 13 c vollständig mit nicht reagiertem Kraftstoff befüllt sind. Aus dem Entnahmebehälter 12 wird nicht reagierter Kraftstoff zwecks Erzeugung von Wasserstoff und Antrieb eines Kfz abgeführt. Wie vorstehend bereits erwähnt wurde, wird der nicht reagierte Kraftstoff in Form von Natriumborhydrid unter Freisetzung von Wasserstoff zwecks Verbrennung oder zwecks Energieerzeugung in einer Brennstoffzelle in Natriumborat umgesetzt. Das Natriumborat wird in dem Sammelbehälter 14 aufgefangen. Zwischen dem Entnahmebehälter 12 und dem Sammelbehälter 14 sind die Vorratsbehälter 13 a, 13 b und 13 c angeordnet. Der Entnahmebehälter 12 wird laufend jeweils aus den Vorratsbehältern 13 a, 13 b und 13 c mit Kraftstoff gespeist. Die nacheinander frei werdenden Vorratsbehälter 13 a, 13 b und 13 c stehen sodann zur Aufnahme von reagiertem Kraftstoff zur Verfügung, wobei der reagierte Kraftstoff selektiv aus dem Sammelbehälter 14 den jeweils freien Vorratsbehältern 13 a, 13 b, und 13 c zugeleitet wird. Dieser Vorgang wird nachstehend im Einzelnen beschrieben.

Der Kraftstoff wird aus dem Entnahmebehälter 12 über die Entnahmeleitung 7 mittels einer Kraftstoffpumpe 24 einem Mischer 25 zugeführt. Der nicht reagierte Kraftstoff in dem Entnahmebehälter 12 enthält 30 Vol. % NaBH₄ in wässriger Lösung. In dem Mischer 25 wird der nicht reagierte Kraftstoff zusätzlich mit Wasser auf eine Konzentration von 20 Gew.% verdünnt. Wie eingangs bereits geschildert, wird das Wasser aus dem Abgas der Brennstoffzelle kondensiert. Von dem Mischer 25 gelangt der nicht reagierte Kraftstoff zu dem Katalysator 26, in welchem unter Abspaltung von reinem Wasserstoff (H₂) Natriumborat (Na-BO₂) erzeugt wird. Das Natriumborat in wässriger Lösung wird über die Leitung 8 dem Sammelbehälter 14 zugeführt. Über ein Druckregelventil 27 wird nicht entnommener Kraftstoff aus der Entnahmeleitung 7 abgezweigt sowie über eine gemeinsame Rücklaufleitung 28 den Behältern 13 a, b, c wieder zugeführt. Die Behälter 13 a, b, c sind über die Rücklaufventile 29 a, b, c an die Rücklaufleitung 28 angeschlossen. Bei der in Figur 7 dargestellten Situation erfolgt der Kraftstoffrücklauf über die Rücklaufleitung 28 in den Vorratsbehälter 13 c. Dort wird über den Kraftstoffrücklauf eine nicht dargestellte Saugstrahlpumpe angetrieben, die aus dem Vorratsbehälter 13 c über eine gemeinsame Speiseleitung 30 den Entnahmebehälter 12 speist. Die Vorratsbehälter 13 a, b, c sind jeweils über ein Speiseventil 31 a, b, c an die Speiseleitung 30 angeschlossen. Die Speiseventile 31 a, b, c schalten außerdem jeweils einen Weg zu einer die Behälter 14, 13 a, 13 b und 13 c verbindende Überlaufleitung 32.

Über nicht dargestellte Füllstandsgeber in jedem der Behälter 14, 13 a, 13 b, 13 c und 12 und eine übergeordnete nicht dargestellte Steuerung erfolgt hierbei die Ansteuerung der Rücklauf-und Speiseventile 29 a, 29 b, 29 c, 31 a, 31 b und 31 c.

Der Vorratsbehälter 13 c speist so lange den Entnahmebehälter 12, bis der Vorratsbehälter 13 c vollständig entleert ist.

Sodann schließt das Rücklaufventil 29 c.

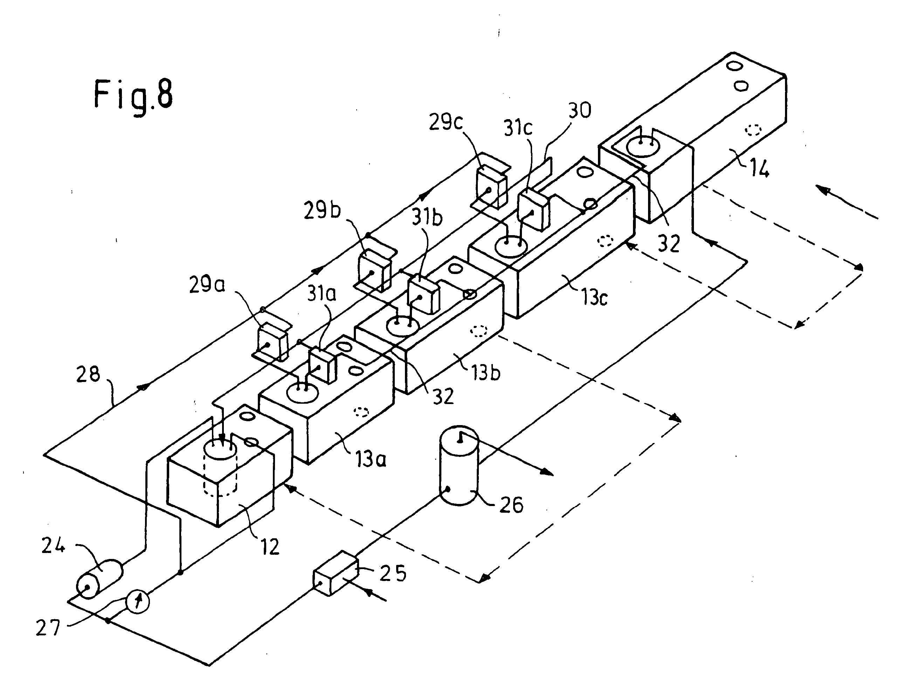

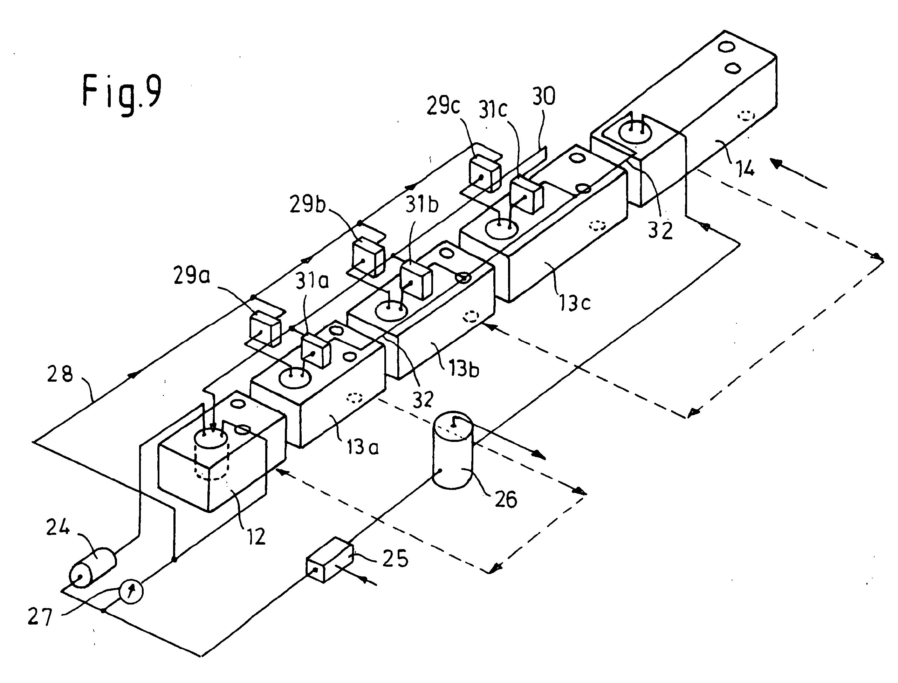

Das Speiseventil 31 c wird so geschaltet, dass die Überlaufleitung 32 von dem Sammelbehälter 14 in den Vorratsbehälter 13 c freigegeben wird. Die Verbindung des Vorratsbehälters 13 c zur Speiseleitung 30 ist in dieser Schaltstellung des Speiseventils 31 c gesperrt. Diese Situation ist in Figur 8 dargestellt. Dort kann der über die Leitung 8 in den Sammelbehälter 14 einlaufende reagierte Kraftstoff in den Vorratsbehälter 13 c überlaufen. Der über die Rücklaufleitung 28 gepumpte Kraftstoff treibt eine in dem Vorratsbehälter 13 b angeordnete Saugstrahlpumpe, die wiederum über die Speiseleitung 30 den Entnahmebehälter 12 speist, so lange bis der Vorratsbehälter 13 b entleert ist. Wenn der Vorratsbehälter 13 b vollständig entleert ist, so wird dies über einen nicht dargestellten Füllstandsgeber erfasst, der wiederum eine Schaltung des Speiseventils 31b bewirkt, welches die Verbindung zu der Speiseleitung 30 schließt und die Verbindung zu der Überlaufleitung 32 öffnet. Aufgrund dieser Ventilschaltung wird reagierter Kraftstoff von dem Sammelbehälter 14 in den Vorratsbehälter 13 b gefördert, wie dies in Figur 9 dargestellt ist. In dieser Situation speist der Vorratsbehälter 13 a den Entnahmebehälter 12, der reagierte Kraftstoff läuft über die Überlaufleitung 32 unmittelbar von dem Sammelbehälter 14 in den Vorratsbehälter 13 b. Das Speiseventil 31 c ist vollständig geschlossen, so dass der Vorratsbehälter 13 c überbrückt ist.

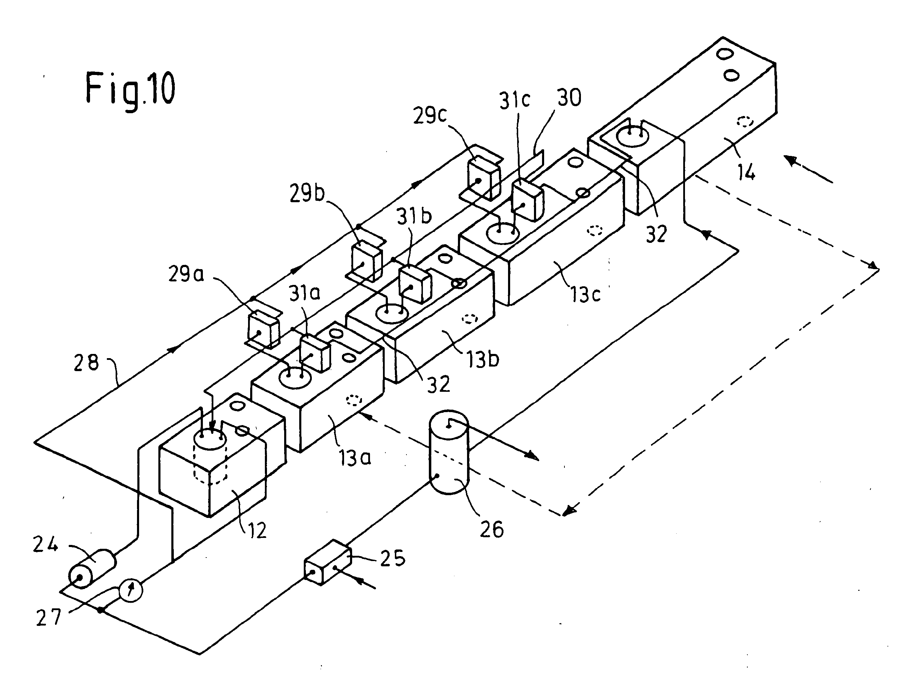

In Figur 10 ist schließlich die Situation dargestellt, bei der reagierter Kraftstoff von dem Sammelbehälter 14 in den Vorratsbehälter 13 a gefördert wird. Der Kraftstoffrücklauf aus dem Entnahmebehälter 12 erfolgt unmittelbar in diesen zurück.

Die Kraftstoffbehälter besitzen alle voneinander abweichende Volumina. Wie andeutungsweise der Zeichnung zu entnehmen ist, besitzt der Sammelbehälter 14 das größte Volumen. Dieses Volumen ist so bemessen, dass diejenige Menge an reagiertem Kraftstoff aufgenommen werden kann, die sich aus der Reaktion des in dem Vorratsbehälter 13 c befindlichen Kraftstoffvolumens ergibt. Der Vorratsbehälter 13 c wiederum ist von seiner Größe so bemessen, dass dieser diejenige Menge an reagiertem Kraftstoff aufnehmen kann, die sich aus der Reaktion des in dem Behälter 13 b befindlichen Kraftstoffvolumens ergibt. Der Kraftstoffbehälter 13 b ist von seinem Volumen so bemessen, dass er diejenige Menge des reagierten Kraftstoffs aufnehmen kann, die sich aus dem Volumen des Kraftstoffbehälters 13 a ergibt und schließlich ist das Volumen des Kraftstoffbehälters 13 a so bemessen, dass er diejenige Menge an reagiertem Kraftstoff aufnehmen kann, die sich aus der vollständigen Umsetzung des in dem Entnahmebehälter 12 befindlichen Kraftstoffvolumens ergibt.

Der Entnahmebehälter 12 sowie die Vorratsbehälter 13 a, b, c sind bevorzugt aus Kunststoff ausgebildet. Da der reagierte Kraftstoff nach Durchtritt durch den Katalysator 26 eine verhältnismäßig hohe Temperatur hat, die abgeführt werden muss, ist der Sammelbehälter 14 bevorzugt aus Metall ausgebildet. Ein solcher Behälter kann besser die Temperatur abführen als ein Kunststoffbehälter. Der Sammelbehälter 14 kann auch aus Kunststoff bestehen, wenn der rückgeführte reagierte Kraftstoff mittels einer Kühlvorrichtung in der Temperatur auch auf ein für den Kunststoff erträgliches Maß abgesenkt wurde.

### Bezugszeichenliste

- 1: Kraftstoffbehälter
- 2: Halbschalen
- 3: erstes Speichervolumen
- 4: zweites Speichervolumen
- 5: Befüllleitung
- 6: Entleerungsleitung
- 7: Entnahmeleitung
- 8: Leitung
- 9: Trennwand
- 10: Flansch
- 11: flexibler Innenbehälter
- 12: Entnahmebehälter
- 13 a, b, c: Vorratsbehälter
- 14: Sammelbehälter
- 15: Befüllleitung
- 16 a, b, c, d: Befüllventile
- 17: Entleerungsleitung
- 18 a, b, c: Entleerungsventile
- 19: Entlüftungsleitung
- 20: Ausperlbehälter
- 21: Leitung
- 22: Befüll- und Entleerungsleitung
- 22 a, b, c, d: Befüll- und Entleerungsventile
- 23: Katalysator
- 24: Kraftstoffpumpe
- 25: Mischer
- 26: Katalysator
- 27: Druckregelventil
- 28: Rücklaufleitung
- 29 a, b, c: Rücklaufventile
- 30: Speiseleitung
- 31 a, b, c: Speiseventile
- 32: Überlaufleitung

## Patentansprüche

1. Verfahren zur Kraftstoffversorgung eines Kraftfahrzeugs mit wenigstens einem Wasserstoffverbraucher, wie beispielweise einer Brennstoffzelle, in welcher Wasserstoff in elektrische Energie umgesetzt wird, wobei der Wasserstoff durch katalytische Reaktion eines als Kraftstoff vorgesehenen Wasserstoffdonators freigesetzt wird und dabei reagierter, rezyklierbarer Kraftstoff anfällt, umfassend die Entnahme nicht reagierten Kraftstoffs aus einem ersten Speichervolumen, die Befüllung wenigstens eines zweiten von dem ersten Speichervolumen getrennten Speichervolumens mit reagiertem Kraftstoff und die wenigstens teilweise zusätzliche Nutzung des durch die Entnahme frei werdenden ersten Speichervolumens zur Speicherung des reagierten Kraftstoffs.

2. Verfahren nach Anspruch 1, **gekennzeichnet durch** die Verwendung mehrerer räumlich voneinander getrennter Behälter als Speichervolumina.

3. Verfahren nach einem der Ansprüche 1 oder 2, **gekennzeichnet durch** die Verwendung wenigstens dreier in Reihe geschalteter Behälter als Speichervolumina, wobei die Entnahme des nicht reagierten Kraftstoffs aus einem Entnahmebehälter erfolgt, der Entnahmebehälter aus wenigstens einem Vorratsbehälter mit nicht reagiertem Kraftstoff gespeist wird, wenigstens ein Sammelbehälter mit reagiertem Kraftstoff befüllt wird und der reagierte Kraftstoff aus dem Sammelbehälter in den oder die Vorratsbehälter umgeleitet wird, wenn der nicht reagierte Kraftstoff vollständig aus diesen entnommen ist.

4. Kraftstoffbehälter-Anordnung zur Kraftstoffversorgung eines Kraftfahrzeugs mit wenigstens einem Wasserstoffverbraucher, beispielsweise einer Brennstoffzelle, in welcher Wasserstoff in elektrische Energie umgesetzt wird, wobei der Wasserstoff durch katalytische Reaktion eines als Kraftstoff vorgesehenen Wasserstoffdonators freigesetzt wird und dabei reagierter, rezyklierbarer Kraftstoff anfällt, umfassend wenigstens einen Entnahmebehälter (12), wenigstens einen Vorratsbehälter (13 a, b, c), der mit dem Entnahmebehälter (12) kommuniziert und der mit Mitteln zur Förderung des Kraftstoffs in den Entnahmebehälter versehen ist und wenigstens einen Sammelbehälter (14), der über einen Überlauf mit einem Vorratsbehälter (13 a, b, c) verbunden ist.

5. Kraftstoffbehälter-Anordnung nach Anspruch 4, **dadurch gekennzeichnet, dass** der Vorratsbehälter (13 a, b, c) über ein schaltbares Mehr-WegeVentil an den Entnahmebehälter (12) und an den Sammelbehälter (14) angeschlossen ist.

6. Kraftstoffbehälter-Anordnung nach Anspruch 4 oder 5, **dadurch gekennzeichnet, dass** wenigstens zwei weitere Vorratsbehälter (13 b, c) vorgesehen sind, die jeweils über schaltbare Ventile mit dem Entnahmebehälter (12) und dem Sammelbehälter (14) kommunizieren.

7. Kraftstoffbehälter-Anordnung nach einem der Ansprüche 4 bis 6, **dadurch gekennzeichnet, dass** die Vorratsbehälter (13 a, b, c) den Entnahmebehälter (12) jeweils über Saugstrahlpumpen speisen, die jeweils über eine Rücklaufleitung (28) aus dem Entnahmebehälter (12) angetrieben sind.

8. Kraftstoffbehälter-Anordnung nach Anspruch 7, **dadurch gekennzeichnet, dass** die Rücklaufleitung (28) von einer Entnahmeleitung (7) aus einem Entnahmebehälter (12) abgezweigt ist.

9. Kraftstoffbehälter-Anordnung nach Anspruch 7 oder 8, **dadurch gekennzeichnet, dass** die Vorratsbehälter (13 a, b, c) jeweils an eine gemeinsame Rücklaufleitung (28) von dem Entnahmebehälter (12) und an eine gemeinsame Speiseleitung (30) zu dem Entnahmebehälter (12) angeschlossen sind.

10. Kraftstoffbehälter-Anordnung nach Anspruch 8 oder 9, **dadurch gekennzeichnet, dass** die Rücklaufleitung (28) über ein Druckregelventil (27) an die Entnahmeleitung (7) angeschlossen ist.

11. Kraftoffbehälter-Anordnung nach einem der Ansprüche 4 bis 10, **dadurch gekennzeichnet, dass** die Größe des Sammelbehälters (14) und der Vorratsbehälter (13 a, b, c) jeweils so bemessen ist, dass der in Förderrichtung des Kraftstoffs jeweils stromaufwärts gelegene Behälter das Volumen an reagiertem Kraftstoff aufnehmen kann, das bei der Entleerung des stromabwärts nachgeschalteten Behälters mit nicht reagiertem Kraftstoff und dessen Verarbeitung anfällt.

12. Kraftstoffbehälter-Anordnung nach einem der Ansprüche 5 bis 11, **dadurch gekennzeichnet, dass** der Entnahmebehälter (12) und die Vorratsbehälter (13 a, b, c) jeweils an eine gemeinsame Befüllleitung (15) angeschlossen sind.

13. Kraftstoffbehälter-Anordnung nach einem der Ansprüche 5 bis 12, **dadurch gekennzeichnet, dass** der Sammelbehälter (14) und die Vorratsbehälter (13 a, b, c) jeweils an eine gemeinsame Entleerungsleitung (17) angeschlossen sind.

## Claims

1. A method of supplying fuel to a motor vehicle comprising at least one hydrogen consumer such as for example a fuel cell in which hydrogen is converted into electrical energy, wherein the hydrogen is liberated by catalytic reaction of a hydrogen donor provided as the fuel and recyclable fuel which has reacted in that operation is produced, including removing unreacted fuel from a first storage volume, filling at least one second storage volume separate from the first storage volume with reacted fuel and at least partially additionally using the first storage volume which has become vacant by virtue of removing fuel therefrom for storage of the reacted fuel.

2. A method according to claim 1 **characterised by** the use of a plurality of mutually spatially separated containers as the storage volumes.

3. A method according to one of claims 1 and 2 **characterised by** the use of at least three series-connected containers as the storage volumes, wherein removal of the unreacted fuel is effected from a removal container, the removal container is fed with unreacted fuel from at least one storage container, at least one collecting container is filled with reacted fuel and the reacted fuel is transferred from the collecting container into the storage container or containers when the unreacted fuel has been completely removed therefrom.

4. A fuel container arrangement for supplying fuel to a motor vehicle comprising at least one hydrogen consumer, for example a fuel cell, in which hydrogen is converted into electrical energy, wherein the hydrogen is liberated by catalytic reaction of a hydrogen donor provided as the fuel and recyclable fuel which has reacted in that operation is produced, including at least one removal container (12), at least one storage container (13a, b, c) which communicates with the removal container (12) and which is provided with means for conveying the fuel into the removal container (12), and at least one collecting container (14) which is connected to a storage container (13a, b, c) by way of an overflow.

5. A fuel container arrangement according to claim 4 **characterised in that** the storage container (13a, b, c) is connected to the removal container (12) and to the collecting container (14) by way of a switchable multiway valve.

6. A fuel container arrangement according to claim 4 or claim 5 **characterised in that** there are provided at least two further storage containers (13b, c), which respectively communicate with the removal container (12) and the collecting container (14) by way of switchable valves.

7. A fuel container arrangement according to one of claims 4 to 6 **characterised in that** the storage containers (13a, b, c) feed the removal container (12) by way of respective suction jet pumps which are each actuated by way of a return conduit (28) from the removal container (12).

8. A fuel container arrangement according to claim 7 **characterised in that** the return conduit (28) is branched from a removal conduit (7) from a removal container (12).

9. A fuel container arrangement according to claim 7 or claim 8 **characterised in that** the storage containers (13a, b, c) are each connected to a common return conduit (28) from the removal container (12) and a common feed conduit (30) to the removal container (12)

10. A fuel container arrangement according to claim 8 or claim 9 **characterised in that** the return conduit (28) is connected to the removal conduit (7) by way of a pressure regulating valve (27).

11. A fuel container arrangement according to one of claims 4 to 10 **characterised in that** the size of the collecting container (14) and the storage containers (13a, b, c) is respectively such that the container which is respectively disposed upstream in the direction of fuel conveyance can receive the volume of reacted fuel which is produced upon emptying of the downstream-connected container with unreacted fuel and processing thereof.

12. A fuel container arrangement according to one of claims 5 to 11 **characterised in that** the removal container (12) and the storage containers (13a, b, c) are respectively connected to a common filling conduit (15).

13. A fuel container arrangement according to one of claims 5 to 12 **characterised in that** the collecting container (14) and the storage containers (13a, b, c) are respectively connected to a common emptying conduit (17).

## Revendications

1. Procédé pour l'alimentation en carburant d'un véhicule automobile avec au moins un consommateur d'hydrogène, comme par exemple une pile à combustible, dans laquelle de l'hydrogène est transformé en énergie électrique, sachant que l'hydrogène est libéré par réaction catalytique d'un donneur d'hydrogène prévu comme carburant et produit, ici, du carburant réactif, recyclable, comprenant le prélèvement de carburant non réactif à partir d'un premier volume de stockage, le remplissage d'au moins un deuxième volume de stockage séparé du premier volume de stockage en carburant réactif et l'utilisation additionnelle au moins en partie du premier volume de stockage devenu libre par le prélèvement pour le stockage du carburant réactif.

2. Procédé selon la revendication 1, **caractérisé** de par l'utilisation de plusieurs réservoirs séparés les uns des autres dans l'espace en tant que volumes de stockage.

3. Procédé selon l'une quelconque des revendications 1 ou 2, **caractérisé** de par l'utilisation d'au moins trois réservoirs montés en série en tant que volumes de stockage, sachant que le prélèvement du carburant non réactif s'effectue à partir d'un réservoir de prélèvement, que le réservoir de prélèvement est alimenté en hydrogène non réactif à partir d'au moins un réservoir de stockage, qu'au moins un réservoir collecteur est rempli en carburant réactif et que le carburant réactif est dévié du réservoir collecteur dans le ou les réservoir(s) de stockage, lorsque le carburant non réactif est totalement prélevé de ceux-ci.

4. Aménagement de réservoir de carburant pour l'alimentation en carburant d'un véhicule automobile avec au moins un consommateur d'hydrogène, par exemple une pile à combustible, dans laquelle de l'hydrogène est transformé en énergie électrique, sachant que l'hydrogène est libéré par réaction catalytique d'un donneur d'hydrogène prévu comme carburant et produit, ici, du carburant réactif, recyclable, comprenant au moins un réservoir de prélèvement (12), au moins un réservoir de stockage (13a, b, c) qui communique avec le réservoir de prélèvement (12) et qui est muni de moyens pour le transport du carburant dans le réservoir de prélèvement et au moins un réservoir collecteur (14) qui est relié par un trop plein à un réservoir de stockage (13a, b, c).

5. Aménagement de réservoir de carburant selon la revendication 4, **caractérisé en ce que** le réservoir de stockage (13a, b, c) est raccordé au réservoir de prélèvement (12) et au réservoir collecteur (14) par le biais d'une vanne commutable à plusieurs voies.

6. Aménagement de réservoir de carburant selon la revendication 4 ou 5, **caractérisé en ce que** sont prévus au moins deux autres réservoirs de stockage (13b, c) qui communiquent respectivement avec le réservoir de prélèvement (12) et le réservoir collecteur (14) par le biais de vannes commutables.

7. Aménagement de réservoir de carburant selon l'une quelconque des revendications 4 à 6, **caractérisé en ce que** les réservoirs de stockage (13a, b, c) alimentent respectivement le réservoir de prélèvement (12) par le biais de pompes à jet aspirant qui sont respectivement actionnées par le biais d'une conduite de retour (28) à partir du réservoir de prélèvement (12).

8. Aménagement de réservoir de carburant selon la revendication 7, **caractérisé en ce que** la conduite de retour (28) est dérivée d'une conduite de prélèvement (7) depuis un réservoir de prélèvement (12).

9. Aménagement de réservoir de carburant selon la revendication 7 ou 8, **caractérisé en ce que** les réservoirs de stockage (13a, b, c) sont respectivement raccordés à une conduite de retour commune (28) du réservoir de prélèvement (12) et à une conduite d'alimentation commune (30) pour le réservoir de prélèvement (12).

10. Aménagement de réservoir de carburant selon la revendication 8 ou 9, **caractérisé en ce que** la conduite de retour (28) est raccordée à la conduite de prélèvement (7) par le biais d'un régulateur de pression (27).

11. Aménagement de réservoir de carburant selon l'une quelconque des revendications 4 à 10, **caractérisé en ce que** la taille du réservoir collecteur (14) et des réservoirs de stockage (13a, b, c) est respectivement dimensionnée, de sorte que le réservoir placé en amont, à chaque fois dans le sens de cheminement du carburant, peut recevoir le volume de carburant réactif obtenu lors du vidage du réservoir intercalé en aval avec du carburant non réactif et son traitement.

12. Aménagement de réservoir de carburant selon l'une quelconque des revendications 5 à 11, **caractérisé en ce que** le réservoir de prélèvement (12) et les réservoirs de stockage (13a, b, c) sont respectivement raccordés à une conduite de remplissage commune (15).

13. Aménagement de réservoir de carburant selon l'une quelconque des revendications 5 à 12, **caractérisé en ce que** le réservoir collecteur (14) et les réservoirs de stockage (13a, b, c) sont respectivement raccordés à une conduite d'évacuation commune (17).
